# EUROPÄISCHE PATENTSCHRIFT

(11) **EP 0 927 868 B1**
(45) Veröffentlichungstag und Bekanntmachung des Hinweises auf die Patenterteilung: **02.07.2008**
(21) Anmeldenummer: 98204257.4
(22) Anmeldetag: 15.12.1998
(51) Int. Cl.: G01D 5/244, G01B 7/30, G01D 3/08, H03M 1/06, G01D 3/02, G01B 7/00

(54) **Sensoranordnung mit Messfehlererkennung**
Sensor device with measurement error recognition
Dispositif capteur avec reconnaissance d'erreurs

(30) Priorität: 22.12.1997 DE 19757196
(43) Veröffentlichungstag der Anmeldung: 07.07.1999
(73) Patentinhaber: NXP B.V., 5656 AG Eindhoven (NL)
(72) Erfinder: Lochmann, Hans-Ulrich, 22335 Hamburg (DE); Pusch, Stefan, 22335 Hamburg (DE)
(74) Vertreter: von Laue, Hanns-Ulrich

(56) Entgegenhaltungen:
- EP-A- 0 367 927
- WO-A-96/29572
- DE-A- 19 530 386
- US-A- 5 406 283
- PATENT ABSTRACTS OF JAPAN vol. 008, no. 257 (P-316), 24. November 1984 (1984-11-24) & JP 59 128410 A (NIPPON DENKI KK), 24. Juli 1984 (1984-07-24)
- "Semiconductor Sensors: excerpt" PHILIPS SEMICONDUCTORS. DATA HANDBOOK, X, XX, Bd. SC17, 6. Dezember 1996 (1996-12-06), Seiten 186-187, XP009088508

## Beschreibung

Die Erfindung betrifft eine Sensoranordnung mit zwei Sensoren und einer Auswerteeinheit gemäß dem Oberbegriff des Anspruchs 1, eine Winkelsensoranordnung mit zwei relativ zueinander winkelversetzt angeordneten Winkelsensoren und einer Auswerteeinheit gemäß dem Oberbegriff des Anspruchs 4 sowie ein Verfahren zur Meßfehlererkennung bei einer solchen Sensoranordnung.

Eine solche Sensoranordnung ist aus dem Philips-Datenhandbuch SC 17, Semiconductor Sensors, Ausgabe 1997, Seiten 186-187 bekannt. Dort sind zwei Winkelsensoren mit jeweils einer A/D-Wandlereinheit (A/D = Analog/Digital) verbunden. Die aus jeweils vier Meßelementen, in Form einer Meßbrücke aufgebauten Winkelsensoren sind relativ zueinander um einen Winkel von 45° versetzt angeordnet und liefern am Ausgang jeweils ein sinusförmiges Sensorsignal. Diese Sensorsignale sind aufgrund der winkelversetzten Anordnung um 90° phasenverschoben. Mittels einer Auswerteeinheit wird aus den beiden Sensorsignalen ein Meßsignal ermittelt, das beispielsweise der Winkelposition eines Meßobjektes gegenüber der Sensoranordnung proportional ist.

Es wurde festgestellt, daß am Eingang der Auswerteeinheit, insbesondere bei der A/D-Wandlung der Sensorsignale Fehler auftreten können, die das zu ermittelnde Meßsignal verfälschen, ohne daß dies am Meßsignal oder an den Sensorsignalen selbst bei der bekannten Sensoranordnung festgestellt werden kann. Solche Fehler können beispielsweise durch eine fehlerhafte A/D-Wandlereinheit verursacht werden. Auch die Sensoren selbst können fehlerhaft arbeiten.

Der Erfindung liegt deshalb die Aufgabe zugrunde, bei der bekannten Sensoranordnung möglichst einfache Maßnahmen zur Erkennung solcher Fehler zu treffen.

Diese Aufgabe wird erfindungsgemäß durch die in Anspruch 1 angegebene Sensoranordnung gelöst. Dort wird in einem ersten Schaltzustand ein erstes Meßsignal wie bei der bekannten Sensoranordnung berechnet. In einem zweiten Schaltzustand werden jedoch die Verbindungen zwischen den Sensoren und den A/D-Wandlereinheiten vertauscht, so daß jeder A/D-Wandlereinheit das andere Sensorsignal zugeführt wird. In diesem Schaltzustand wird ein zweites Meßsignal ermittelt, das dann mit dem ersten Meßsignal verglichen wird. Aus diesem Vergleich wird ein Fehlersignal generiert, das eine Aussage darüber liefert, ob ein Fehler vorliegt oder nicht. Als Fehlerkriterium kann dabei beispielsweise die Differenz zwischen den beiden Meßsignalen dienen, für die ein Grenzwert definiert werden kann. Der Aufwand für diese effektive Lösung zur Erkennung von Fehlern am Eingang der Auswerteeinheit ist sehr gering und besteht im einfachsten Fall darin, einfache Umschaltmittel zwischen den beiden Sensoren und den beiden A/D-Wandlereinheiten vorzusehen. Solche Umschaltmittel können beispielsweise einfache taktgesteuerte Schalter oder ein Multiplexer sein.

Die Speichermittel bei der vorteilhaften Ausgestaltung gemäß Anspruch 2 sollen gewährleisten, daß die im zweiten Schaltzustand von den A/D-Wandlereinheiten verarbeiteten Sensorsignale sich nicht von den im ersten Schaltzustand verarbeiteten Sensorsignalen unterscheiden. Solche Speichermittel sind dann vorzusehen, wenn sich die Meßgröße, beispielsweise die Winkelposition eines Meßobjekts, sehr schnell ändert. Wenn andererseits gewährleistet werden kann, daß sich die Sensorsignale während des ersten und zweiten Schaltzustandes nicht ändern, können diese Speichermittel auch entfallen.

Um auch Fehler innerhalb der Auswerteeinheit feststellen zu können, ist gemäß der Weiterbildung nach Anspruch 3 vorgesehen, eine zweite Recheneinheit zusätzlich zu der bei der bekannten Sensoranordnung vorgesehenen einen Recheneinheit einzusetzen. Beispielsweise kann das erste Meßsignal mit der ersten Recheneinheit und das zweite Meßsignal mit der zweiten Recheneinheit bestimmt werden, um somit Fehler in der Recheneinheit festzustellen. Denkbar wäre auch zunächst mit der ersten Recheneinheit ein erstes und ein zweites Meßsignal und anschließend in einem zweiten Durchgang mit der zweiten Recheneinheit wiederum ein erstes und ein zweites Meßsignal (aus denselben Sensorsignalen wie bei der Berechnung mit der ersten Recheneinheit) zu bestimmen und anschließend zu vergleichen.

Die Sensoranordnung kann auch gemäß Anspruch 4 um ein weiteres, dem ersten Sensorpaar identisches Sensorpaar erweitert sein, dessen Sensorsignale als redundant zu dem ersten Sensorpaar während eines dritten und vierten Schaltzustandes ausgewertet werden. Die Auswerteeinheit ist dafür nur geringfügig zu ändern. Die Sensoranordnung arbeitet dann auch noch, wenn ein Sensor oder ein ganzes Sensorpaar ausfallen.

Die Erfindung eignet sich insbesondere zum Einsatz bei einer in Anspruch 5 angegebenen Winkelsensoranordnung, d. h. bei einer Sensoranordnung, die in Gestalt einer Winkelsensoranordnung vorliegt.

Eine vorteilhafte Weiterbildung sieht vor, dass zwischen den Winkelsensoren und den A/D-Wandlereinheiten Umschaltmittel vorgesehen sind zum Schalten von zwei Schaltzuständen derart, daß in jedem Schaltzustand den A/D-Wandlereinheiten je ein Sensorsignal zugeführt ist und daß die Zuordnung der Sensorsignale zu den A/D-Wandlereinheiten in den beiden Schaltzuständen unterschiedlich ist, und daß die Auswerteeinheit ausgestaltet ist zur Bestimmung eines Fehlersignals aus zwei während jeweils eines Schaltzustandes ermittelten Meßsignalen.
Das in Anspruch 7 angegebene Verfahren zur Meßfehlererkennung ist auch bei anderen Sensoranordnungen einsetzbar, bei denen aus jeweils zwei Sensorsignalen ein Meßsignal ermittelt wird.

Die Erfindung wird nachfolgend anhand der Zeichnung näher erläutert. Es zeigen:
- Fig. 1: ein Blockschaltbild einer erfindungsgemäßen Winkelsensoranordnung,
- Fig.2: ein Diagramm zur Darstellung der Ausgangskennlinien einer solchen Winkelsensoranordnung und
- Fig. 3: ein Blockschaltbild einer erfindungsgemäßen Winkelsensoranordnung mit zwei Sensorpaaren.

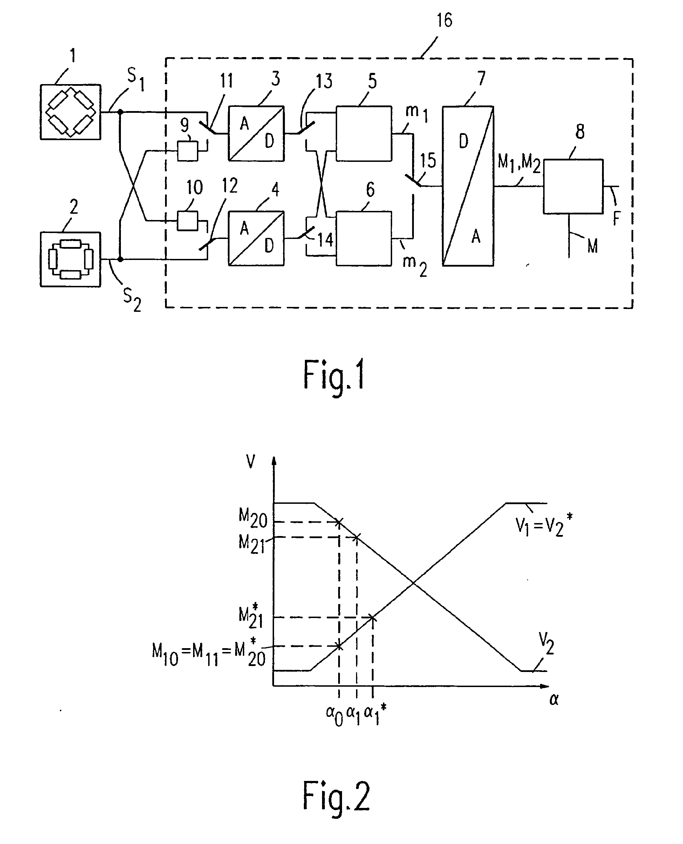

In Fig. 1 sind zwei Winkelsensoren 1,2 der eingangs beschriebenen Art gezeigt, die aufgrund der winkelversetzten Anordnung zwei um 90° phasenverschobene Sensorsignale S₁, S₂ liefern. Bevorzugt sind die Winkelsensoren 1,2 auf einem einzigen Chipgehäuse nebeneinander oder wie bei der bekannten Anordnung ineinander verschlungen angeordnet. In einem ersten Schaltzustand, in dem sich alle Schalter 11 bis 15 in der gezeigten Stellung befinden, wird das Sensorsignal S₁ dem A/D-Wandler 3 und das Sensorsignal S₂ dem A/D-Wandler 4 zugeführt. Die gewandelten Sensorsignale werden der Recheneinheit 5 zugeführt, die daraus ein erstes Meßsignal m₁ bestimmt. Nach Digital/Analog-Wandlung im D/A-Wandler 7 wird das analoge Meßsignal M₁ der Ausgangseinheit 8 zugeführt, wo es zunächst gespeichert wird. Als Meßsignal M₁ liegt nun eine Spannung vor, deren Amplitude abhängig ist von dem Wert der zu messenden Meßgröße, hier von dem Betrag des Drehwinkels des Meßobjekts gegenüber den Winkelsensoren 1,2.

Anschließend werden nun alle Schalter 11 bis 15 der Auswerteeinheit 16 in die zweite (nicht gezeigte) Stellung gebracht. Dem A/D-Wandler 3 wird dann das mittels eines Speicherelements 9, z. B. eines Sample- and Hold-Gliedes gespeicherte Sensorsignal S₂ zugeführt, während dem A/D-Wandler 4 das im Speicherelement 10 gespeicherte Sensorelement S₁ zugeführt wird. Die Speicherung in den Speicherelementen 9,10 ist dabei so ausgelegt, daß im zweiten Schaltzustand dieselben Sensorsignale S₁, S₂ wie im ersten Schaltzustand verarbeitet werden. Die gewandelten Sensorsignale werden nun in der Recheneinheit 6 verarbeitet, die ein zweites Meßsignal m₂ bestimmt, welches nach Digital/Analog-Wandlung als analoges Meßsignal M₂ ebenfalls der Ausgangseinheit 8 zugeführt wird. Aus dem Vergleich der dort vorliegenden beiden Meßsignale M₁, M₂ kann entweder bei Überschreiten einer vorgegebenen Tolerenz ein alarmgebendes Fehlersignal F ausgegeben werden oder im Falle der Einhaltung der Toleranz das Ausgangssignal M beispielsweise als Mittelwert aus den beiden Meßsignalen M₁, M₂ oder direkt eines der beiden Meßsignale M₁, M₂.

Das Diagramm in Fig. 2 zeigt als Kennlinien einer solchen Winkelsensoranordnung die Ausgangsspannung V in Abhängigkeit von dem zu messenden Winkel α. Im ersten Schaltzustand hat die Winkelsensoranordnung eine Kennlinie V₁, während im zweiten Schaltzustand je nach Beschaltung (Polarität) der Eingänge der Recheneinheit 6 entweder eine zur Kennlinie V₁ komplementäre Kennlinie V₂ oder eine zur Kennlinie V₁ identische Kennlinie V₂* gilt.

Bei einem zu messenden Winkel α₀ ergibt sich beispielsweise bei korrekt arbeitender Auswerteeinheit im ersten Schaltzustand ein Meßwert M₁₀ (Meßwert = Amplitude des analogen Meßsignals) und im zweiten Schaltzustand ein Meßwert M₂₀ bzw. M₂₀*. Ist die Differenz zwischen M₁₀ und M₂₀ bzw. M₂₀* innerhalb eines vorgegebenen Grenzwertes, so liegt kein Fehler vor. Bei fehlerhaft arbeitender Auswerteeinheit kann sich jedoch die Situation ergeben, daß im ersten Schaltzustand ein Meßwert M₁₁ ermittelt wird, der auf einen Winkel α₀ hindeutet, während im zweiten Schaltzustand ein völlig anderer Meßwert M₂₁ bzw. M₂₁* ermittelt wird, der auf einen ganz anderen Winkel α₁ bzw. α₁* hindeutet. Die Differenz zwischen diesen Meßwerten wird dann nicht mehr innerhalb des definierten Grenzbereiches liegen, so daß ein Fehlersignal F erzeugt werden kann, das die Fehlerhaftigkeit der Auswerteeinheit 16 anzeigt.

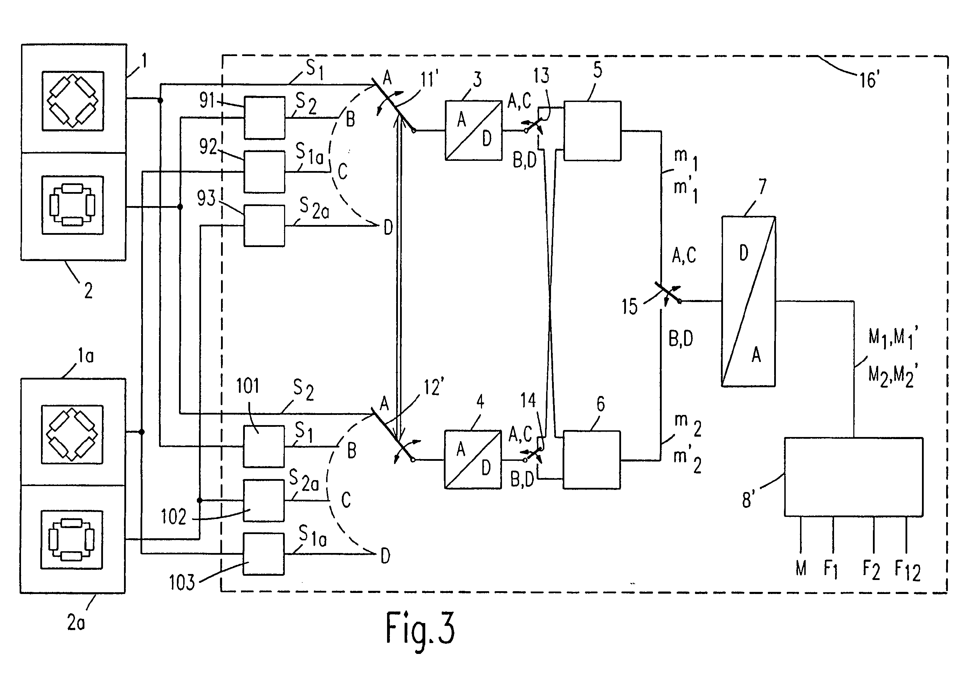

Bei der in Fig. 3 dargestellten Winkelsensoranordnung sind neben den beschriebenen zwei Sensoren 1, 2 zwei weitere, den Sensoren 1, 2 identische Sensoren 1a, 2a vorgesehen. Die Umschaltmittel 11' und 12' sind so ausgestaltet, daß vier Schaltzustände A, B, C, D nacheinander geschaltet werden, wobei in den ersten beiden Schaltzuständen A, B die Sensorsignale S₁, S₂ der Sensoren 1, 2 in der beschriebenen Weise ausgewertet werden und zu Meßsignalen M₁, M₂ führen und in den weiteren zwei Schaltzuständen C, D die Sensorsignale S₁ₐ, S₂ₐ der Sensoren 1a, 2a in der beschriebenen Weise ausgewertet werden und zu Meßsignalen M₁', M₂' führen. Auch die Schalter 13, 14, 15, werden dazu entsprechend geschaltet. Um in allen Schaltzuständen zeitgleich gemessene Sensorsignale zu verarbeiten, sind entsprechende Speichermittel 91 bis 93 und 101 bis 103 vorgesehen.

Die Ausgangseinheit kann hier verschiedene Fehlermeldungen ausgeben: Fehlersignal F₁ zeigt an, daß bei der Verarbeitung der Sensorsignale S₁, S₂ ein Fehler aufgetreten ist (F₁ entspricht dem Fehlersignal F in Fig. 1). Ein entsprechendes Fehlersignal F₂ kann einen Fehler bei der Verarbeitung der Sensorsignale S₁ₐ, S₂ₐ anzeigen. Ein Fehlersignal F₁₂ kann aus dem Vergleich der Meßsignale M₁, M₁' mit den Meßsignalen M₂, M₂' generiert werden, beispielsweise aus dem Vergleich der beiden Mittelwerte, um so den Ausfall eines der Sensoren 1, 2, 1a, 2a festzustellen. Als Ausgangswert wird auch hier der gesuchte Meßwert M ausgegeben, der beispielsweise der Mittelwert aller vier Meßsignale sein kann.

Die Erfindung kann auch im Zusammenhang mit anderen Sensoren eingesetzt werden, von denen einige beispielhaft genannt sein sollen:
a) In der Strömungsmeßtechnik werden zwei Sensoren zur Messung der Strömungsgeschwindigkeit eingesetzt, wobei der erste Sensor die Schallgeschwindigkeit des strömenden Mediums und die Strömungsgeschwindigkeit, der zweite, im "Strömungsschatten" angeordnete Sensor nur die Schallgeschwindigkeit mißt.
b) Zur Temperaturkompensation in einer Schaltung können zwei Sensoren eingesetzt werden, von denen einer die temperaturabhängige Meßgröße und der andere nur die Temperatur mißt.
c) Zur Differenzdruckmessung können zwei Drucksensoren eingesetzt werden.

## Patentansprüche

1. Sensoranordnung mit zwei Sensoren (1, 2) und einer Auswerteeinheit (16) zur Ermittlung eines Meßsignals (M₁, M₂) aus zwei von je einem Sensor (1, 2) ausgegebenen Sensorsignalen (S₁, S₂), wobei die Auswerteeinheit (16) eingangsseitig zwei A/D-Wandlereinheiten (3, 4) aufweist, **dadurch gekennzeichnet, daß** zwischen den Sensoren (1, 2) und den A/D-Wandlereinheiten (3, 4) Umschaltmittel (11, 12) vorgesehen sind zum Schalten von zwei Schaltzuständen derart, dass in jedem Schaltzustand den A/D-Wandlereinheiten (3, 4) je ein Sensorsignal (S₁, S₂) zugeführt ist und daß die Zuordnung der Sensorsignale (S₁, S₂) zu den A/D-Wandlereinheiten (3, 4) in den beiden Schaltzuständen unterschiedlich ist, und daß die Auswerteeinheit (16) ausgestaltet ist zur Bestimmung eines Fehlersignals (F) aus zwei während jeweils eines Schaltzustandes ermittelten Meßsignalen (M₁, M₂).

2. Sensoranordnung nach Anspruch 1,
**dadurch gekennzeichnet, daß** Speichermittel (9, 10) vorgesehen sind zur Speicherung der während des ersten Schaltzustandes ermittelten Sensorsignale (S₁, S₂) und daß die Umschaltmittel (11, 12) derart ausgestaltet sind, daß im zweiten Schaltzustand die gespeicherten Sensorsignale (S₁, S₂) an den A/D-Wandlereinheiten (3, 4) anliegen.

3. Sensoranordnung nach Anspruch 1 oder 2,
**dadurch gekennzeichnet, daß** die Auswerteeinheit (16) zwei den A/D-Wandlereinheiten (3, 4) nachgeschaltete Recheneinheiten (5, 6) aufweist und daß Umschaltmittel (13, 14) vorgesehen sind zum Umschalten der Verbindung zwischen den A/D-Wandlereinheiten (3, 4) und den Recheneinheiten (5, 6) derart, daß in einem Schaltzustand beide A/D-Wandlereinheiten (3, 4) mit einer ersten Recheneinheit (5) und im anderen Schaltzustand beide A/D-Wandlereinheiten (5, 6) mit der zweiten Recheneinheit (6) verbunden sind.

4. Sensoranordnung nach Anspruch 1,
**dadurch gekennzeichnet, daß** zwei weitere jeweils ein Sensorsignal (S₁ₐ, S₂ₐ) ausgebende Sensoren (1a, 2a) vorgesehen sind, daß die Umschaltmittel (11', 12') vorgesehen sind zum Schalten zweier weiterer Schaltzustände derart, daß in diesen weiteren Schaltzuständen die Sensorsignale (S₁ₐ, S₂ₐ) der zwei weiteren Sensoren (1a, 2a) ausgewertet werden und daß die Auswerteeinheit ausgestaltet ist zur Bestimmung von Fehlersignalens (F₁, F₂, F₁₂) aus den vier während jeweils eines Schaltzustandes ermittelten Meßsignalen (M₁, M₂, M₁', M₂').

5. Sensoranordnung nach einem der vorhergehenden Ansprüche, **dadurch gekennzeichnet, dass** die Sensoranordnung in Gestalt einer Winkelsensoranordnung vorliegt, die zwei relativ zueinander winkelversetzt angeordnete Winkelsensoren (1, 2) und eine Auswerteeinheit (16) zur Ermittlung eines Meßsignals (M₁, M₂) aus zwei von je einem Winkelsensor (1, 2) ausgegebenen Sensorsignalen (S₁, S₂) aufweist, wobei die Auswerteeinheit (16) eingangsseitig zwei A/D-Wandlereinheiten (3, 4) aufweist.

6. Sensoranordnung nach Anspruch 5,
**dadurch gekennzeichnet, dass** zwischen den Winkelsensoren (1, 2) und den A/D-Wandlereinheiten (3, 4) Umschaltmittel (11, 12) vorgesehen sind Schalten von zwei Schaltzuständen derart, daß in jedem Schaltzustand den A/D-Wandlereinheiten (3, 4) je ein Sensorsignal (S₁, S₂) zugeführt ist und daß die Zuordnung der Sensorsignale (S₁, S₂) zu den A/D-Wandlereinheiten (3, 4) in den beiden Schaltzuständen unterschiedlich ist, und daß die Auswerteeinheit (16) ausgestaltet ist zur Bestimmung eines Fehlersignals (F) aus zwei während jeweils eines Schaltzustandes ermittelten Meßsignalen (M₁, M₂).

7. Verfahren zur Meßfehlererkennung bei einer Sensoranordnung, bei der aus zwei Sensorsignalen (S₁, S₂) mittels einer zwei A/D-Wandlereinheiten (3, 4) aufweisenden Auswerteeinheit (16) ein Meßsignal (M₁, M₂) ermittelt wird,
**dadurch gekennzeichnet, daß** die beiden Sensorsignale (S₁, S₂) mittels jeweils einer A/D-Wandlereinheit (3, 4) gewandelt werden, daß aus deren Ausgangssignalen ein erstes Meßsignal (M₁) ermittelt wird, daß die beiden Sensorsignale (S₁, S₂) mit jeweils der anderen A/D-Wandlereinheit (3, 4) gewandelt werden, daß aus deren Ausgangssignalen ein zweites Meßsignal (M₂) ermittelt wird und daß aus den beiden Meßsignalen (M₁, M₂) ein Fehlersignal (F) ermittelt wird.

## Claims

1. A sensor device comprising two sensors (1, 2) and a evaluation unit (16) for deriving a measurement signal (M₁, M₂) from two sensor signals (S₁, S₂) which are each supplied by one sensor (1, 2), the evaluation unit (16) having two A/D converter units (3, 4) on its input side, **characterized in that** switching means (11, 12) have been provided between the sensors (1, 2) and the A/D converter units (3, 4), for switching to two switching states in such a manner that in each switching state a sensor signal (S₁, S₂) is applied to each of the A/D converter units (3, 4) and that the allocation of the sensor signals (S₁, S₂) to the A/D converter units (3, 4) is different in the two switching states, and **in that** the evaluation unit (16) is constructed to derive an error signal (F) from two measurement signals (M₁, M₂) determined during each time one switching state.

2. A sensor device as claimed in claim 1, **characterized in that** memory means (9, 10) have been provided for storing the sensor signals (S₁, S₂) determined during the first switching state, and **in that** the switching means (11, 12) are constructed in such a manner that the stored sensor signals (S₁, S₂) are applied to the A/D converter units (3, 4) in the second switching state.

3. A sensor device as claimed in claim 1 or 2, **characterized in that** the processing unit (16) comprises two arithmetic units (5, 6) arranged after the A/D converter units (3, 4), and **in that** switching means (13, 14) have been provided to switch the connection between the A/D converter units (3, 4) and the arithmetic units (5, 6) in such a manner that both A/D converter units (3, 4) are connected to a first arithmetic unit (5) in one switching state and both A/D converter units (5, 6) are connected to the second arithmetic unit (6) in the other switching state.

4. A sensor device as claimed in claim 1, **characterized in that** two further sensors (1a, 2a) each supplying one sensor signal (S₁ₐ, S₂ₐ) have been provided, **in that** the switching means (11', 12') are constructed to switch to two further switching states in such a manner that in these further switching states the sensor signals (S₁ₐ, S₂ₐ) of the two further sensors (1a, 2a) are processed, and **in that** the evaluation unit is constructed to derive error signals (F₁, F₂, F₁₂) from the four measurement signals (M₁,M₂,M₁', M₂') determined during each time one switching state.

5. A sensor device as claimed in any one of the preceding claims, **characterized in that** the sensor device is present in the form of an angular-position sensor device which comprises two angular-position sensors (1, 2) angularly spaced from one another, and an evaluation unit (16) for deriving a measurement signal (M₁, M₂) from two sensor signals (S₁, S₂) delivered each by one angular-position sensor (1, 2), which evaluation unit (16) has on its input side two A/D converter units (3, 4).

6. A sensor device as claimed in claim 5, **characterized in that** switching means (11, 12) have been provided between the angular-position sensors (1,2) and the A/D converter units (3, 4), for switching to two switching states in such manner that in each switching state a sensor signal (S₁, S₂) is applied to each of the A/D converter units (3, 4) and **in that** the allocation of the sensor signals (S₁, S₂) to the A/D converter units (3, 4) is different in the two switching states, and **in that** the evaluation unit (16) is constructed to derive an error signal (F) from two measurement signals (M₁, M₂) determined during each time one switching state.

7. A method of measurement-error recognition in a sensor device in which a measurement signal (M₁, M₂) is derived from two sensor signals (S₁, S₂) by means of an evaluation unit (16) comprising two A/D converter units (3, 4), **characterized in that** the two sensor signals (S₁, S₂) are converted by means of one A/D converter (3, 4), **in that** a first measurement signal (M₁) is derived from the output signals of said A/D converter units, **in that** the two sensor signals (S₁, S₂) are converted by means of the other A/D converter unit (4, 3), **in that** a second measurement signal (M₂) is derived from their output signals, and **in that** an error signal (F) is derived from the two measurement signals (M₁, M₂).

## Revendications

1. Dispositif de détection avec deux capteurs (1, 2) et une unité d'évaluation (16) servant à déterminer un signal de mesure (M₁, M₂) à partir de deux signaux de détection (S₁, S₂) respectivement émis par un capteur (1, 2), l'unité d'évaluation (16) présentant du côté de l'entrée deux unités de conversion A/N (3, 4), **caractérisé en ce qu'**entre les capteurs (1, 2) et les unités de conversion A/N (3, 4) des moyens de commutation (11, 12) sont prévus pour assurer la commutation de deux états de commutation de telle manière que dans chaque état de commutation, respectivement un signal de détection (S₁, S₂) est acheminé aux unités de conversion A/N (3, 4), et **en ce que** l'affectation des signaux de détection (S₁, S₂) aux unités de conversion A/N (3, 4) est différente dans les deux états de commutation, et **en ce que** l'unité d'évaluation (16) est réalisée pour déterminer un signal d'erreur (F) à partir de deux signaux de mesure (M₁, M₂) déterminés respectivement pendant un état de commutation.

2. Dispositif de détection selon la revendication 1,
**caractérisé en ce que** des moyens de stockage (9, 10) sont prévus pour le stockage des signaux de détection (S₁, S₂) déterminés lors du premier état de commutation, et **en ce que** les moyens de commutation (11, 12) sont réalisés de telle manière que, dans le deuxième état de commutation, les signaux de détection (S₁, S₂) enregistrés sont appliqués aux unités de conversion A/N (3, 4).

3. Dispositif de détection selon les revendications 1 ou 2,
**caractérisé en ce que** l'unité d'évaluation (16) présente deux unités de calcul (5, 6) branchées en aval des unités de conversion A/N (3, 4), et **en ce que** des moyens de commutation (13, 14) sont prévus pour assurer la commutation de la liaison entre les unités de conversion A/N (3, 4) et les unités de calcul (5, 6) de telle manière que, dans un état de commutation, les deux unités de conversion A/N (3, 4) sont reliées à une première unité de calcul (5), et **en ce que** dans l'autre état de commutation, les deux unités de conversion A/N (5, 6) sont reliées à la deuxième unité de calcul (6).

4. Dispositif de détection selon la revendication 1,
**caractérisé en ce que** deux autres capteurs (1a, 2a) émettant respectivement un signal de détection (S₁ₐ, S₂ₐ) sont prévus, **en ce que** les moyens de commutation (11', 12') sont prévus pour assurer la commutation de deux autres états de commutation de telle manière que, dans ces autres états de commutation, les signaux de détection (S₁ₐ, S₂ₐ) des deux autres capteurs (1a, 2a) sont évalués, et **en ce que** l'unité d'évaluation est réalisée pour déterminer des signaux d'erreur (F₁, F₂, F₁₂) à partir des quatre signaux de mesure (M₁, M₂, M_{1'}, M_{2'}) déterminés respectivement pendant un état de commutation.

5. Dispositif de détection selon l'une des revendications précédentes, **caractérisé en ce que** le dispositif de détection se présente sous la forme d'un dispositif de détection angulaire, lequel présente deux capteurs angulaires (1,2) disposés selon un décalage angulaire l'un par rapport à l'autre, et une unité d'évaluation (16) servant à déterminer un signal de mesure (M₁, M₂) à partir de deux signaux de détection (S₁, S₂) émis par respectivement un capteur angulaire (1, 2), l'unité d'évaluation (16) présentant du côté de l'entrée deux unités de conversion A/N (3, 4).

6. Dispositif de détection selon la revendication 5, **caractérisé en ce qu'**entre les capteurs angulaires (1, 2) et les unités de conversion A/N (3, 4), des moyens de commutation (11, 12) sont prévus, pour assurer la commutation de deux états de commutation de telle manière que, dans chaque état de commutation, respectivement un signal de détection (S₁, S₂) est acheminé au unités de conversion A/N (3, 4), et **en ce que** l'affectation des signaux de détection (S₁, S₂) aux unités de conversion A/N (3, 4) est différente dans les deux états de commutation, et **en ce que** l'unité d'évaluation (16) est réalisée pour déterminer un signal d'erreur (F) à partir de deux signaux de mesure (M₁, M₂) déterminés respectivement pendant un état de commutation.

7. Procédé de détection d'erreurs de mesure dans le cas d'un dispositif de détection, dans le cadre duquel on détermine, à partir de deux signaux de détection (S₁, S₂), au moyen d'une unité d'évaluation (16) présentant deux unités de conversion A/N (3, 4), un signal de mesure (M₁, M₂), **caractérisé en ce que** les deux signaux de détection (S₁, S₂) sont respectivement convertis au moyen d'une unité de conversion A/N (3, 4), **en ce qu'**à partir de leurs signaux de sortie, on détermine un premier signal de mesure (M₁), **en ce que** les deux signaux de détection (S₁, S₂) sont respectivement convertis à l'aide de l'autre unité de conversion A/N (3, 4), **en ce qu'**à partir de leurs signaux de sortie, on détermine un deuxième signal de mesure (M₂), et **en ce que** l'on détermine un signal d'erreur (F) à partir des deux signaux de mesure (M₁, M₂).
